# EUROPEAN PATENT APPLICATION

(11) **EP 4 718 393 A1**
(43) Date of publication of application: **01.04.2026**
(21) Application number: 25203301.4
(22) Date of filing: 19.09.2025
(51) Int. Cl.: G06V 20/52, G06V 20/40, G06V 10/25, G06V 10/75, G06V 20/00

(54) **SYSTEM, METHOD AND DEVICE FOR DETECTION AND ANALYSIS OF WILDFIRE SMOKE**

(30) Priority: 27.09.2024 US 202418899870
(71) Applicant: Sensenet Inc., Vancouver, British Columbia V6A 2V3 (CA)
(72) Inventor: NOORI, Hamed, Vancouver V6A 2V3 (CA); BAHRAMI, Shahab, Vancouver V6A 2V3 (CA)
(74) Representative: Boco IP Oy Ab

(57) **Abstract**

A system, method, and device for the detection and analysis of wildfire smoke are provided. The system includes an imaging device for collecting image data and a processing server including a queueing subsystem, a motion detection subsystem, and a smoke detection subsystem. The queueing subsystem includes an initial frame assessment module, a resource allocation module, and a queue management module. The motion detection subsystem includes a grid cell division module, a change detection module, and a density calculation module. The smoke detection subsystem includes a preliminary object filtering module, and a deep learning-based analysis module to analyze image data using a smoke detection model trained to detect smoke, the smoke detection model comprising a machine-learning-based pattern detection model configured to receive image data as an input and generate a score describing a smoke detection as an output.

## Description

### Technical Field

The following relates generally to wildfire risk management, and more particularly to systems, methods and devices for the detection and analysis of wildfire smoke.

### Introduction

Wildfires are catastrophic events that can cause significant environmental damage, economic loss and, tragically, the loss of human lives. Therefore, early detection and analysis are crucial for minimizing these impacts.

Existing methods for detecting and analyzing wildfires often lack precision, rely on data that is out of date, or do not effectively integrate multiple critical factors that contribute to wildfire risks. The absence of precise, dynamic risk assessment tools means that pre-emptive actions are not as targeted or effective as desired, leading to missed opportunities for detection, prevention and early intervention.

Accordingly, there is a need for improved systems, methods and devices for wildfire risk prediction that overcome at least some of the disadvantages of existing techniques.

### Summary

There is a provided a system for detection and analysis of wildfire smoke using artificial intelligence. The system includes an imaging device configured to collect image data; a processing server for processing the collected image data, the processing server including a queueing subsystem including an initial frame assessment module configured to receive the collected image data from the imaging device; filter the collected image data based on predetermined filtration criteria; a resource allocation module configured to adjust an allocation of processing resources based on an amount of the filtered image data; a queue management module configured to prioritize the filtered image data based on predetermined priority criteria to generate prioritized image data; a motion detection subsystem including a grid cell division module configured to divide each image frame in the prioritized image data into a plurality of grid cells; a change detection module configured to determine changes between consecutive image frames of the prioritized image data by comparing pixels within each grid cell of the plurality of grid cells of the consecutive image frames; a density calculation and filtering module configured to, in response to detecting changes indicative of smoke, calculate a density of pixel changes, wherein grid cells having a density below a predetermined density threshold are discarded; and a smoke detection subsystem including a preliminary object filtering module configured to identify and remove irrelevant objects from the prioritized image data; a deep learning-based analysis module configured to analyze the prioritized image data using a smoke detection model trained to detect smoke, the smoke detection model comprising a machine-learning-based pattern detection model configured to receive the prioritized image data as an input and generate a score describing a smoke detection as an output.

The smoke detection subsystem may further include an automated camera control module configured to, in response to detecting smoke, control the imaging device to focus on an area where the smoke detection occurred.

The smoke detection subsystem may further include an alert mechanism module configured to provide an alert to relevant personnel.

The predetermined filtration criteria may include at least one of clarity, format, and integrity of the collected image data.

The processing resources may include at least one of central processing unit (CPU) resources and graphical processing unit (GPU) resources.

The predetermined priority criteria may include at least one of a higher risk of wildfire in a depicted area and signals from previously detected smoke.

The changes between consecutive image frames may include at least one of direction of smoke changes, pattern of smoke changes, and shape of smoke changes.

The score may be outputted as a single numerical score or as a categorical score.

The deep learning-based analysis module may be further configured to evaluate a predicted wildfire smoke detection against an actual wildfire occurrence to assess an accuracy of the smoke detection model.

There is provided a method for detection and analysis of wildfire smoke using artificial intelligence. The method includes receiving collected image data from an imaging device; filtering the collected image data based on predetermined filtration criteria; adjusting an allocation of processing resources based on an amount of the filtered image data; prioritizing the filtered image data based on predetermined priority criteria to generate prioritized image data; dividing each image frame in the prioritized image data into a plurality of grid cells; determining changes between consecutive image frames of the prioritized image data by comparing pixels within each grid cell of the plurality of grid cells of the consecutive image frames; in response to detecting changes indicative of smoke, calculating a density of pixel changes, wherein grid cells having a density below a predetermined density threshold are discarded; identifying and removing irrelevant objects from the prioritized image data; analyzing the prioritized image data using a smoke detection model trained to detect smoke, the smoke detection model comprising a machine-learning-based pattern detection model configured to receive the prioritized image data as an input and generate a score describing a smoke detection as an output.

The method may further include, in response to detecting smoke, controlling the imaging device to focus on an area where the smoke detection occurred.

The method may further include providing an alert to relevant personnel.

The predetermined filtration criteria may include at least one of clarity, format, and integrity of the collected image data.

The processing resources may include at least one of CPU resources and GPU resources.

The predetermined priority criteria may include at least one of a higher risk of wildfire in a depicted area and signals from previously detected smoke.

The changes between consecutive image frames may include at least one of direction of smoke changes, pattern of smoke changes, and shape of smoke changes.

The score may be outputted as a single numerical score or as a categorical score.

The method may further include evaluating a predicted wildfire smoke detection against an actual wildfire occurrence to assess an accuracy of a smoke detection model.

There is provided a device for detection and analysis of wildfire smoke using artificial intelligence. The device includes a network interface; a processor; and a non-transitory computer readable memory having stored thereon instructions that, when executed by the processor, cause the device to receive collected image data from an imaging device; filter the collected image data based on predetermined filtration criteria; adjust an allocation of processing resources based on an amount of the filtered image data; prioritize the filtered image data based on predetermined priority criteria to generate prioritized image data; divide each image frame in the prioritized image data into a plurality of grid cells; determine changes between consecutive image frames of the prioritized image data by comparing pixels within each grid cell of the plurality of grid cells of the consecutive image frames; in response to detecting changes indicative of smoke, calculate a density of pixel changes, wherein grid cells having a density below a predetermined density threshold are discarded; identify and remove irrelevant objects from the prioritized image data; analyze the prioritized image data using a smoke detection model trained to detect smoke, the smoke detection model comprising a machine-learning-based pattern detection model configured to receive the prioritized image data as an input and generate a score describing a smoke detection as an output.

The device may be further configured to, in response to detecting smoke, control the imaging device to focus on an area where the smoke detection occurred.

The device may be further configured to provide an alert to relevant personnel.

The predetermined filtration criteria may include at least one of clarity, format, and integrity of the collected image data.

The processing resources may include at least one of CPU resources and GPU resources.

The predetermined priority criteria may include at least one of a higher risk of wildfire in a depicted area and signals from previously detected smoke.

The changes between consecutive image frames may include at least one of direction of smoke changes, pattern of smoke changes, and shape of smoke changes.

The score may be outputted as a single numerical score or as a categorical score.

The device may be further configured to evaluate a predicted wildfire smoke detection against an actual wildfire occurrence to assess an accuracy of a smoke detection model.

Other aspects and features will become apparent, to those ordinarily skilled in the art, upon review of the following description of some exemplary embodiments.

### Brief Description of the Drawings

The drawings included herewith are for illustrating various examples of systems, methods, and devices of the present specification. In the drawings:
Figure 1 is a block diagram of a system for detection and analysis of wildfire smoke using artificial intelligence, according to an embodiment;
Figure 2 is a flowchart of a method for detection and analysis of wildfire smoke using artificial intelligence, according to an embodiment;
Figure [[3]] 3A is a block diagram of a device, located within a network, for the detection and analysis of wildfire smoke using artificial intelligence, according to an embodiment;
Figure 3B is a schematic diagram of an electronic device configured to perform any or all of operations of the method of Figure 2, according to an embodiment;
Figure 4 is a schematic diagram of a system for detection and analysis of wildfire smoke, according to an embodiment; and
Figure 5 is a block diagram of an exemplary electronic device for the detection and analysis of wildfire smoke, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

As used herein, the term "about" should be read as including variation from the nominal value, for example, a +/-10% variation from the nominal value. It is to be understood that such a variation is always included in a given value provided herein, whether or not specifically referred to.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server and personal computer, cloud-based program or system, laptop, personal data assistants, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present disclosure.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to wildfire risk management, and more particularly to systems, methods and devices for the detection and analysis of wildfire smoke.

Current wildfire detection models often rely on out of date or unreliable data. This lack of appropriate data makes it difficult to identify small-scale environmental changes that significantly impact wildfire detection. Moreover, many models do not holistically incorporate or integrate the fire triangle risk factor elements (weather, fuel, and potential ignition sources) alongside topographical features, which are highly valuable for accurate wildfire risk assessment. Similarly, existing models frequently offer static risk assessments that do not reflect daily changes in environmental conditions or potential ignition sources. Moreover, the presence of irrelevant objects in imagery often interferes with accurate analysis, leading to gaps in data that are highly valuable for risk prediction.

To address these challenges, embodiments disclosed herein describe techniques for the detection and analysis of wildfire smoke using artificial intelligence (AI).

Utilizing a series of interconnected subsystems, the system disclosed herein manages incoming data through a sophisticated queuing subsystem or process to handle and prioritize video frames from numerous cameras.

The system employs a motion detection subsystem, which divides frames into grid cells and identifies potential smoke movements based on pixel changes, movement direction, and shape. Candidate cells exhibiting smoke-like characteristics are further analyzed by a dedicated smoke detection algorithm. This algorithm, trained on extensive datasets, is adept at confirming the presence of smoke and enabling automated camera controls for detailed examination of suspected areas.

The system operates continuously, ensuring robust, real-time surveillance and significantly enhancing early wildfire detection capabilities. This integrated approach leverages deep learning and computer vision technologies to provide a highly efficient and accurate solution for wildfire monitoring and management.

The multi-tiered Al system for detecting and analyzing wildfire smoke includes a dynamic smoke detection model that leverages image data and machine learning algorithms. The embodiments disclosed herein are multifaceted, integrating continuous image data collection to provide a comprehensive and up-to-date tool for detection.

A queuing subsystem serves as a backbone for managing incoming video frames from hundreds of imaging devices (e.g., cameras). This subsystem efficiently monitors and allocates computing resources (central processing unit (CPU) and graphical processing unit (GPU)) based on the processing demand. The queueing subsystem queues frames meeting preliminary specifications such as format, visibility, and pixel integrity for further analysis. Other frames not meeting the preliminary specifications are discarded, optimizing resource usage and response time.

Dynamic resource scaling enables the overall system to dynamically adjust the computing resources allocated to frame processing based on the current load. This adaptability ensures efficient processing without overuse of resources, which advantageously maintains system performance during peak times such as high wind conditions, which may cause more motion in the camera's field of view.

Before queuing, each frame undergoes a light processing check to assess visibility, check format compliance, and identify any pixel damage. This initial filtering reduces unnecessary processing of unsuitable frames, thereby enhancing the efficiency of the detection process.

In the motion detector subsystem, frames are divided into grid cells, which allows the algorithm to analyze small, specific areas for changes. This localized analysis helps to accurately identify potential smoke movements without the interference of other motions in the surrounding areas.

The motion detection subsystem analyzes pixel changes between consecutive frames within each grid cell. By determining the direction and pattern of movement, the motion detection subsystem identifies upward, smoke-like motions, which are highly valuable for early smoke detection. Only movements resembling a cone-like shape, typical of rising smoke, may be considered for further analysis.

After identifying potential smoke movements, the motion detection subsystem calculates the density of changed pixels in each cell. Grid cells where the density exceeds a predefined threshold (e.g., 80% changed pixels) are marked as candidates for smoke presence. This selective filtering helps in focusing the computational effort on the most likely areas of interest.

Grid cells that pass the density threshold are selected and forwarded to the smoke detection subsystem. This staged processing ensures that only highly probable areas are analyzed in depth, improving the accuracy and efficiency of the system.

The smoke detection subsystem is configured to detect smoke within the candidate grid cells identified by the motion detection subsystem. The smoke detection subsystem employs a sophisticated algorithm trained on extensive datasets to accurately distinguish smoke from other atmospheric phenomena. Within this subsystem, an initial filtering module identifies and removes large, irrelevant objects such as lakes, clouds, buildings, and moving vehicles. Such initial filtering advantageously ensures that the motion detection subsystem focuses exclusively on areas likely to contain wildfire smoke, significantly enhancing detection accuracy by minimizing false positives.

The system features an intelligent control of camera zoom, automatically focusing on areas identified as containing potential smoke. This capability allows for detailed examination of distant smoke, enhancing detection accuracy and providing crucial time for early intervention.

The integration of these subsystems creates a robust and reliable detection mechanism, operating continuously. The seamless interaction between the queuing, motion detection, and smoke detection subsystems ensures that the system is both proactive in detecting potential fires and efficient in resource use.

Machine learning algorithms and automated data processing pipelines may be used in embodiments of the present disclosure for tasks including, without limitation, data collection, processing, and analysis, reducing manual intervention and increasing the efficiency and timeliness of risk assessments, irrelevant object detection and removal, data interpolation for weather parameters, and the generation of probabilistic risk scores.

By applying probabilistic modeling techniques to detect wildfire smoke, daily reports may be generated that indicate the likelihood of wildfire occurrences. The foregoing includes statistical analysis and modeling to quantify uncertainty and provide risk assessments in a probabilistic format.

Embodiments disclosed herein provide an innovative and dynamic tool for wildfire smoke detection, significantly improving the ability of communities, emergency services, and environmental agencies to prepare for, limit, and potentially prevent, wildfires. Advantageously, this proactive approach may minimize the devastating impacts of wildfires through early detection and accurate risk assessment, ultimately saving lives, preserving ecosystems, and reducing economic losses.

Another benefit realized from techniques disclosed herein is the ability to provide stakeholders, including fire departments, forest management agencies, and policymakers, with actionable intelligence that may guide preventive measures, resource allocation, and emergency response strategies. The foregoing may advantageously contribute to the safety of communities at risk of wildfires and the preservation of natural environments by enabling more proactive and informed wildfire management practices.

Moreover, leveraging infrastructure such as cloud computing platforms for the processing and analysis of large datasets, including imagery, weather data, and historical wildfire occurrences, further supports the computational techniques disclosed herein, enabling scalable data storage, processing, and analysis capabilities.

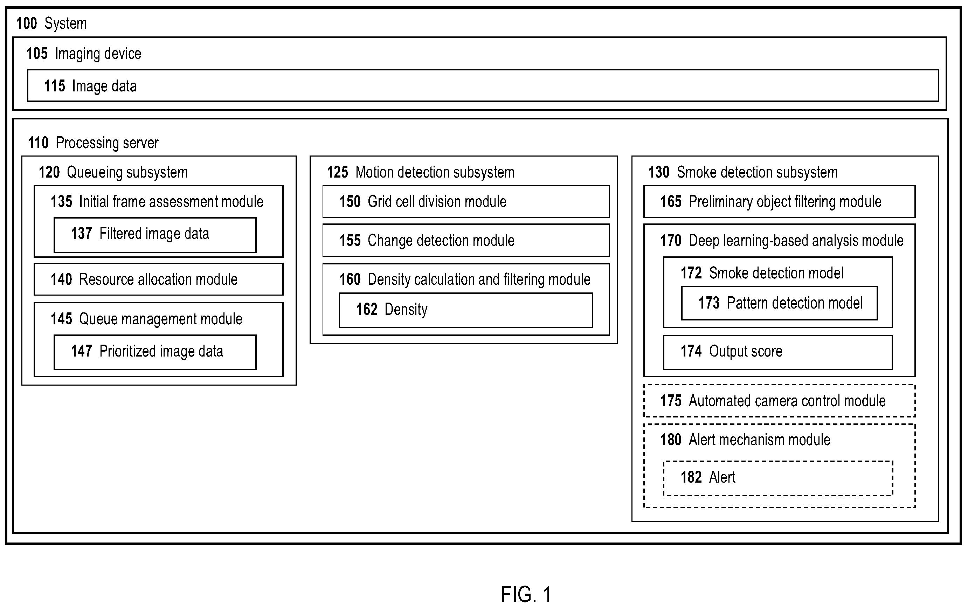

Referring now to Figure 1, shown therein is a block diagram of a system 100 for the detection and analysis of wildfire smoke using artificial intelligence, according to an embodiment.

The system 100 includes an imaging device 105 for collecting image data 115. The image data 115 may be high-resolution image data. For clarity of illustration, only a single imaging device 105 is shown, but it will be appreciated that the system 100 may include any number of the imaging devices 105, e.g., a plurality of the imaging devices 105.

In an embodiment, the imaging device 105 is a camera system.

The imaging device 105 collects high-resolution imagery 115 on a frequent basis (e.g., daily) covering a target area. The imagery 115 includes real-time weather data and information on topographical features and potential ignition sources (e.g., roads, campgrounds, railroads, and power lines).

The system 100 further includes a processing server 110 for processing the image data 115 collected by the imaging device 105 and generating output score 174. Such output score 174 is specifically generated by a queueing subsystem 120, a motion detection subsystem 125, and a smoke detection subsystem 130, as will be further explained hereinbelow.

The queueing subsystem 120 includes an initial frame assessment module 135 configured to receive the image data 115 from the imaging device 105, and to filter the image data 115 based on predetermined filtration criteria to generate filtered image data 137.

As video frames arrive from various cameras as the image data 115, the video frames are first assessed for basic quality metrics such as clarity, format, and integrity of the collected image data. Frames that do not meet the set criteria may be immediately discarded to ensure that only viable data consumes processing power.

The queueing subsystem 120 further includes a resource allocation module 140 configured to adjust an allocation of processing resources based on an amount of the filtered image data 137, i.e., where more filtered image data 137 is provided by the initial frame assessment module 135, more processing resources may be allocated accordingly.

Based on the current load and the number of frames being processed, the queueing subsystem 120 dynamically adjusts the allocation of central processing unit (CPU) and graphical processing unit (GPU) resources. This scalability is highly advantageous for maintaining optimal processing speed and efficiency, particularly during high-demand scenarios where the number of frames increases due to environmental factors (e.g., windy conditions).

The queueing subsystem 120 further includes a queue management module 145 configured to prioritize the filtered image data 137 based on predetermined priority criteria.

The queueing subsystem 120 maintains a queue where frames that pass the initial assessment (i.e., the filtered image data 137) are stored temporarily. The queue management module 145 prioritizes frames based on certain criteria to generate prioritized image data 147. Such criteria may include areas known for higher wildfire risks or signals from previously detected smoke.

The motion detection subsystem 125 includes a grid cell division module 150 configured to divide each image frame in the prioritized image data 147 into a plurality of grid cells.

As each frame in the prioritized image data 147 is divided into smaller grid cells, such division allows for localized analysis, focusing on specific sections of the frame where motion is detected, thereby reducing false positives from other unrelated movements.

The motion detection subsystem 125 further includes a change detection module 155 configured to determine changes between consecutive image frames of the prioritized image data 147 by comparing pixels within each grid cell of the plurality of grid cells of the consecutive image frames.

The motion detection subsystem 125 compares pixels in consecutive frames within each grid cell to detect changes. By analyzing the direction and shape of these changes, the motion detection subsystem 125 identifies patterns indicative of smoke, such as upward, cone-shaped movements, e.g., according to an algorithm.

The motion detection subsystem 125 further includes a density calculation and filtering module 160 configured to, in response to detecting changes indicative of smoke, calculate a density 162 of pixel changes. Grid cells having a density 162 below a predetermined density threshold are discarded.

After detecting potential smoke-like motions, the motion detection subsystem 125 may use algorithms or other techniques to calculate the density 162 of pixel changes. Only cells with a density 162 above a predetermined threshold are passed on for further analysis, ensuring that the overall system focuses on the most likely smoke indications.

The smoke detection subsystem 130 includes a preliminary object filtering module 165 configured to identify and remove irrelevant objects from the prioritized image data 147.

The foregoing initial filtering functionality identifies and removes large irrelevant objects such as lakes, clouds, buildings, and moving vehicles, thereby enabling the smoke detection subsystem 130 to focus exclusively on areas likely to contain wildfire smoke, significantly enhancing detection accuracy by minimizing false positives.

The smoke detection subsystem 130 further includes a deep learning-based analysis module 170 configured to analyze the prioritized image data 147 using a smoke detection model 172 trained to detect smoke, the smoke detection model 172 including a machine-learning-based pattern detection model 173 configured to receive the prioritized image data 147 as an input and generate a score describing a smoke detection as the output score 174.

The candidate cells identified by the motion detection subsystem 125 are further analyzed by the smoke detection subsystem 130, which includes a deep learning-based analysis module 170 providing a sophisticated Al algorithm trained on a large dataset of smoke images. The deep learning-based analysis module 170 employs deep learning techniques to accurately differentiate between smoke and other atmospheric phenomena.

In an embodiment, the output score 174 includes a single numerical score, with a greater output score 174 corresponding to an elevated possibility of wildfire. For example, the output score 174 may quantify the possibility of wildfire out of 100. Similarly, the output score 174 may include a binary determination of risk level, with a value of "1" corresponding to a possibility of wildfire and with a value of "0" corresponding to no possibility of wildfire.

In an embodiment, the output score 174 includes a categorical score. For example, the output score 174 may be assigned from a fixed set of three or more possible categories with each corresponding to a level of the possibility of a wildfire (e.g., none, low, medium, or high). The categorical score may be determined by converting a numerical score to a categorical score, with each category corresponding to a range of possible numerical score values.

Advantageously, embodiments disclosed herein improve wildfire smoke detection and accuracy. Techniques of the present disclosure may be used to significantly enhance the accuracy of wildfire smoke detection by leveraging high-resolution imagery, advanced machine learning algorithms, and data analysis, including a nuanced assessment of several factors.

Furthermore, the regularly (e.g., daily) updated image data for detecting wildfire smoke, reflects real-time changes in weather in this dynamic implementation. This represents a significant improvement over the static nature of conventional models, offering more timely and relevant risk assessments.

The smoke detection subsystem 130 further includes an automated camera control module 175 configured to, in response to detecting smoke in an area of interest, control the imaging device 105 to focus on an area of interest where smoke detection occurred.

Upon confirming the presence of smoke, the smoke detection subsystem 130 may automatically control the imaging device 105 and/or zoom functions thereof to focus in on the area of interest. This allows for detailed examination of the smoke source, aiding in the verification of fire presence and the exact location of the fire.

In an embodiment, the smoke detection subsystem 130 further comprises an alert mechanism module 180 configured to provide an alert 182 to relevant personnel.

Once smoke is confirmed, the smoke detection subsystem 130 triggers an alert protocol, notifying local authorities and fire management teams. This prompt response capability is highly desirable for early intervention and potentially limiting the spread of wildfires.

In an embodiment, the predetermined filtration criteria include at least one of clarity, format, and integrity of the collected image data.

In an embodiment, processing resources include at least one of central processing unit (CPU) resources, and graphical processing unit (GPU) resources.

In an embodiment, the predetermined priority criteria include at least one of a higher risk of wildfire in a depicted area and signals from previously detected smoke.

In an embodiment, changes between consecutive image frames include at least one of direction of smoke changes, pattern of smoke changes, and shape of smoke changes.

In an embodiment, the deep learning-based analysis module 170 is further configured to evaluate a predicted wildfire smoke detection against an actual wildfire occurrence to assess an accuracy of the smoke detection model 172.

In an embodiment, techniques presented in the system 100 are subject to seasonal reviews and updates to adapt to changing environmental conditions and climate patterns. This ensures that the smoke detection model 172 remains relevant and effective in detecting wildfire smoke year-round.

Furthermore, regular, seasonal reviews and updates of the predictive algorithms (e.g., the pattern detection model 173) of the smoke detection model 172 and the data provided thereto may advantageously ensure that the smoke detection model 172 remains accurate over time, adjusting to new patterns in climate, vegetation growth, and urban development.

Techniques disclosed herein may be used to serve as a highly valuable tool for further research and development in the field of wildfire detection and management, encouraging innovation and the adoption of advanced technologies in environmental monitoring.

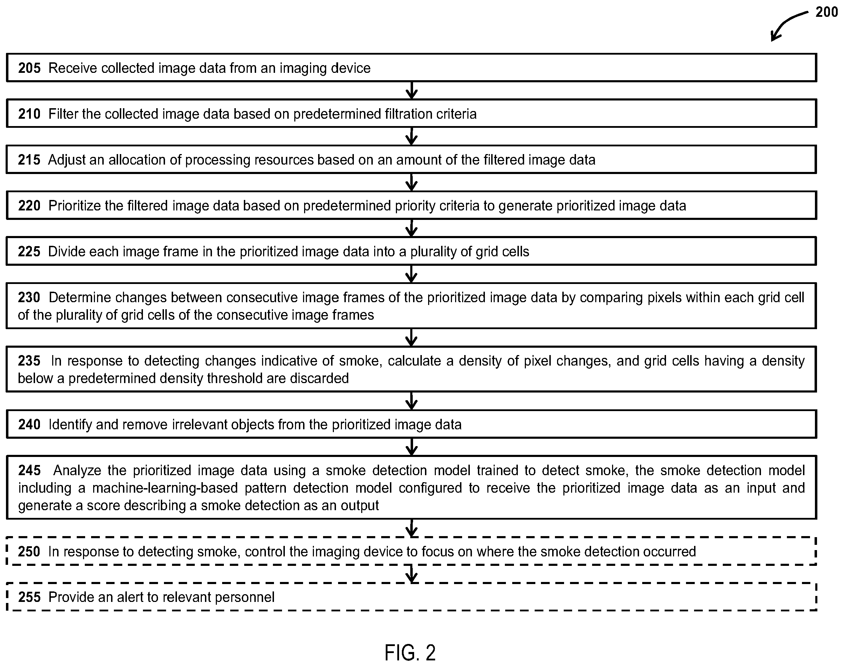

Referring now to Figure 2, shown therein is a flowchart of a method 200 for the detection and analysis of wildfire smoke using artificial intelligence, according to an embodiment. All or parts of the method 200 may be implemented at or by the system 100 of Figure 1.

At 205, the method 200 includes receiving collected image data from an imaging device.

In an embodiment, the imaging device is a camera system.

At 210, the method 200 further includes filtering the collected image data based on predetermined filtration criteria.

As video frames are received from various cameras, the video frames are first assessed for basic quality metrics such as clarity, format, and integrity of the collected image data. Frames that do not meet the set criteria may be immediately discarded to ensure that only viable data consumes processing power.

At 215, the method 200 further includes adjusting an allocation of processing resources based on an amount of the filtered image data.

Based on the current load and the number of frames being processed, the allocation of central processing unit (CPU) and graphical processing unit (GPU) resources is dynamically adjusted. This scalability is highly advantageous for maintaining optimal processing speed and efficiency, particularly during high-demand scenarios where the number of frames increases due to environmental factors (e.g., windy conditions).

At 220, the method 200 further includes prioritizing the filtered image data based on predetermined priority criteria to generate prioritized image data.

Frames are thus prioritized based on certain criteria, such as areas known for higher wildfire risks or signals from previously detected smoke.

At 225, the method 200 further includes dividing each image frame in the prioritized image data into a plurality of grid cells.

This division allows for localized analysis, focusing on specific sections of the frame where motion is detected, thereby reducing false positives from other unrelated movements.

At 230, the method 200 further includes determining changes between consecutive image frames of the prioritized image data by comparing pixels within each grid cell of the plurality of grid cells of the consecutive image frames.

Pixels in consecutive frames within each grid cell are compared to detect changes. By analyzing the direction and shape of these changes, the method 200 identifies patterns indicative of smoke, such as upward, cone-shaped movements.

At 235, the method 200 further includes, in response to detecting changes indicative of smoke, calculating a density of pixel changes, and grid cells having a density below a predetermined density threshold are discarded.

Only cells with a density above a predetermined threshold are passed on for further analysis, ensuring that the overall system focuses on the most likely smoke indications.

At 240, the method 200 further includes identifying and removing irrelevant objects from the prioritized image data.

An initial filtering element identifies and removes large, irrelevant objects such as lakes, clouds, buildings, and moving vehicles to ensure that the focus is exclusively on areas likely to exhibit wildfire smoke, significantly enhancing detection accuracy by minimizing false positives.

At 245, the method 200 further includes analyzing the prioritized image data using a smoke detection model trained to detect smoke, the smoke detection model comprising a machine-learning-based pattern detection model configured to receive the prioritized image data as an input and generate a score describing a smoke detection as an output.

The candidate cells identified by the motion detector are further analyzed by a sophisticated Al algorithm trained on a large dataset of smoke images. Deep learning techniques may be used to accurately differentiate between smoke and other atmospheric phenomena.

Accordingly, machine learning algorithms may be used to analyze potential wildfire smoke data alongside current environmental conditions for optimal detection capabilities.

In an embodiment, the score includes a single numerical score, with a greater score corresponding to an elevated possibility of wildfire. For example, the score may quantify the possibility of wildfire out of 100.

In an embodiment, the score includes a binary determination of risk level, with a value of "1" corresponding to a possibility of wildfire and with a value of "0" corresponding to no possibility of wildfire.

The score may include a categorical score. For example, the score may be assigned from a fixed set of three or more possible categories with each corresponding to a possibility level of wildfire (e.g., none, low, medium, or high). The categorical score may be determined by converting a numerical score to a categorical score, with each category corresponding to a range of possible numerical score values.

In an embodiment, and at 250, the method 200 further includes, in response to detecting smoke, controlling the imaging device to focus on an area where the smoke detection occurred.

In an embodiment, and at 255, the method 200 further includes providing an alert to relevant personnel.

In an embodiment, the predetermined filtration criteria include at least one of clarity, format, and integrity of the collected image data.

In an embodiment, processing resources includes at least one of central processing unit (CPU) resources and graphical processing unit (GPU) resources.

In an embodiment, the predetermined priority criteria include at least one of a higher risk of wildfire in a depicted area and signals from previously detected smoke.

In an embodiment, changes between consecutive image frames include at least one of direction of smoke changes, pattern of smoke changes, and shape of smoke changes.

In an embodiment, the method further includes evaluating a predicted wildfire smoke detection against an actual wildfire occurrence to assess an accuracy of a smoke detection model.

In an embodiment, techniques presented in the method 200 are subject to seasonal reviews and updates to adapt to changing environmental conditions and climate patterns. This ensures that the method 200 remains relevant and effective in detecting wildfire smoke year-round.

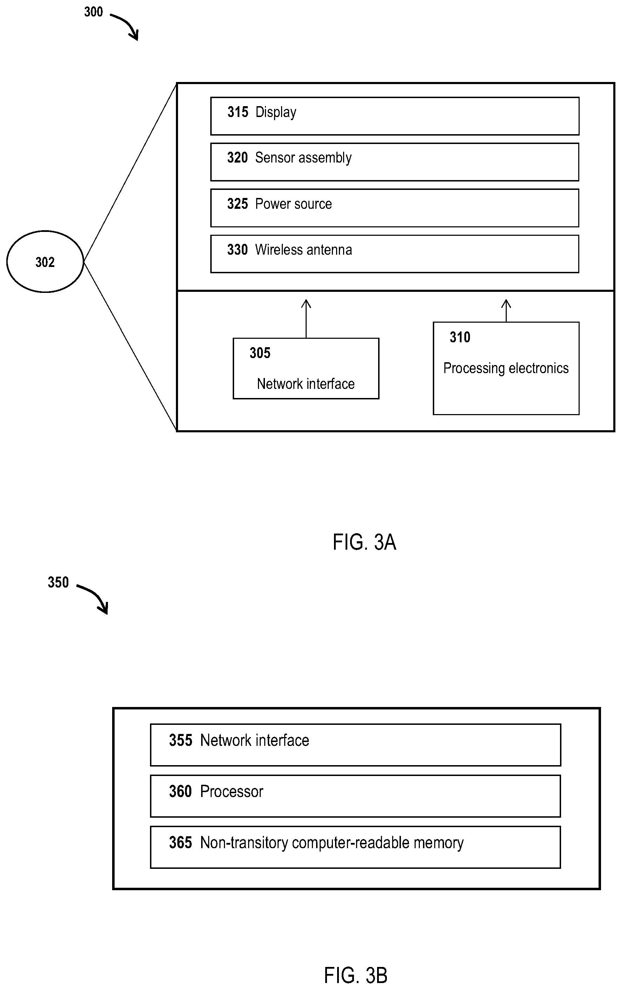

Referring now to Figure 3A, shown therein is a device 300 for the detection and analysis of wildfire smoke using artificial intelligence, according to an embodiment.

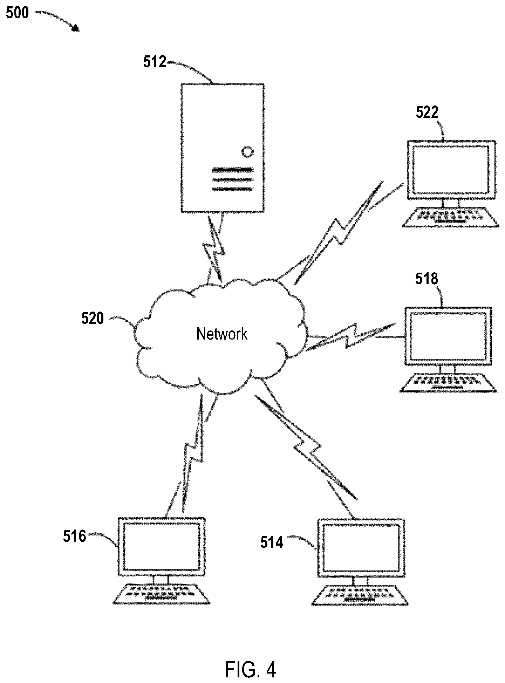

The device 300 may be located at a node 302 of a network, such as the network 520 of Figure 4.

The device 300 includes a network interface 305 and processing electronics 310, such as a processing server 310.

The processing server 310 may include a computer processor executing program instructions stored in memory, or other electronics components such as digital circuitry, including for example FPGAs and ASICs (not shown).

The network interface 305 may include an optical communication interface or radio communication interface, such as a transmitter and receiver.

The device 300 further includes a display 315 (e.g., an LCD screen), a sensor assembly 320, a power source 325, and a wireless antenna 330 for wireless network communication.

User interaction with the device 300 is performed through the display 315. The processing server 310 may interact with the display 315. Information, such as text, characters, symbols, images, icons, and other items that may be displayed or rendered on a computing device as generated by the processing server 310 may be displayed on the display 315.

The sensor assembly 320 includes a plurality of sensors for performing different functions. For example, the sensor assembly 320 may include, without limitation, an imaging sensor, an air temperature sensor, a carbon dioxide sensor, a smoke sensor, an air humidity sensor, and/or a ground moisture sensor. The sensor assembly 320 may include further or other types of sensors in addition to or instead of the foregoing.

The device 300 may be a battery-powered device and may include a battery interface for receiving one or more rechargeable batteries at the power source 325.

The wireless antenna 330 may be used to connect to any type of wireless network, including, but not limited to, data-centric wireless networks, voice-centric wireless networks, and dual-mode networks that support both voice and data communications.

The device 300 may include several other functional components, each of which is partially or fully implemented using the underlying network interface 305 and processing server 310.

Referring now to Figure 3B, shown therein is a schematic diagram of an electronic device 350 configured to perform any or all of operations of the method 200 of Figure 2, according to an embodiment. For example, a computer equipped with network function may be configured as the electronic device 350. The electronic device 350 may be used to implement the device 300 of Figure 3A, for example.

As shown, the electronic device 350 includes at least one processor 360, such as a central processing unit (CPU) and/or specialized processors such as a graphics processing unit (GPU) or other such processor unit, non-transitory computer-readable memory 365, and a network interface 355, all of which may be communicatively coupled.

According to certain embodiments, any or all of the depicted elements may be utilized, or only a subset of the elements. Further, the electronic device 350 may include multiple instances of certain elements, such as multiple processors 360, memories 365, or network interfaces 355.

Additionally or alternatively to a processor 360 and memory 365, other electronics, such as integrated circuits, may be employed for performing the required logical operations.

The memory 365 may include any type of non-transitory memory such as static random access memory (SRAM), dynamic random access memory (DRAM), synchronous DRAM (SDRAM), read-only memory (ROM), any combination of such, or the like.

In an embodiment, the memory 365 has recorded thereon statements and instructions executable by the processor 360 for performing any of the aforementioned method operations described herein.

For example, in an embodiment, the electronic device 350 is configured to receive collected image data from an imaging device, filter the collected image data based on predetermined filtration criteria, adjust an allocation of processing resources based on an amount of the filtered image data, prioritize the filtered image data based on predetermined priority criteria to generate prioritized image data, divide each image frame in the prioritized image data into a plurality of grid cells, determine changes between consecutive image frames of the prioritized image data by comparing pixels within each grid cell of the plurality of grid cells of the consecutive image frames, in response to detecting changes indicative of smoke, calculate a density of pixel changes, discarding grid cells having a density below a predetermined density threshold, identify and remove irrelevant objects from the prioritized image data, analyze the prioritized image data using a smoke detection model trained to detect smoke, the smoke detection model including a machine-learning-based pattern detection model configured to receive the prioritized image data as an input and generate a score describing a smoke detection as an output.

Figure 4 depicts a network system 500, according to an embodiment.

The network system 500 includes a server 512 configured to communicate with a plurality of imaging devices 514 (of which one is shown at 514 in Figure 4), a plurality of database devices 516 (of which one is shown at 516 in Figure 4), and a plurality of administrator devices 518 (of which one is shown at 518 in Figure 4) via a network 520. The server 512 is further configured to communicate with a plurality of user devices 522 (of which one is shown at 522 in Figure 4). The server 512 may be a purpose-built machine designed specifically for the detection and analysis of wildfire smoke using artificial intelligence, such as the device 300 of Figure 3, for example.

The server 512, imaging devices 514, database devices 516, administrator devices 518 and user devices 522 may be, each or together, a server computer, desktop computer, notebook computer, tablet, PDA, smartphone, or another computing device.

The server 512 and/or devices 514, 516, 518, 522 may include a connection with the network 520 such as a wired or wireless connection to the Internet. In some cases, the network 520 may include other types of computer or telecommunication networks.

The server 512 and/or devices 514, 516, 518, 522 may include one or more of a memory, a secondary storage device, a processor, an input device, a display device, and an output device. Memory may include random access memory (RAM) or similar types of memory. Also, memory may store one or more applications for execution by a processor. Applications may correspond with software modules comprising computer executable instructions to perform processing for the functions described below. Secondary storage device may include a hard disk drive, floppy disk drive, CD drive, DVD drive, Blu-ray drive, or other types of non-volatile data storage.

Processor may execute applications, computer readable instructions, or programs. The applications, computer readable instructions, or programs may be stored in memory or in secondary storage or may be received from the Internet or other network 520. Input device may include any device for entering information into the server 512 or devices 514, 516, 518, 522. For example, the input device may be a keyboard, keypad, cursor-control device, touchscreen, camera, or microphone.

Display device may include any type of device for presenting visual information. For example, display device may be a computer monitor, a flat-screen display, a projector, or a display panel. Output device may include any type of device for presenting a hard copy of information, such as a printer, for example. Output device may also include other types of output devices such as speakers, for example.

In some cases, the server 512 or the devices 514, 516, 518, 522 may include multiple of any one or more of processors, applications, software modules, secondary storage devices, network connections, input devices, output devices, and display devices.

Although the server 512 or the devices 514, 516, 518, 522 are described with various components, one skilled in the art will appreciate that the server 512 or the devices 514, 516, 518, 522 may in some cases contain fewer, additional or different components. In addition, although aspects of an implementation of the server 512 or the devices 514, 516, 518, 522 may be described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM. The computer-readable media may include instructions for controlling the server 512 or the devices 514, 516, 518, 522 and/or processor to perform a particular method.

In the present disclosure, devices, apparatus, or other components are described as performing certain acts. It will be appreciated that any one or more of these devices may perform an act automatically or in response to an interaction by a user of that device. That is, the user of the device may manipulate one or more input devices (e.g. a touchscreen, a mouse, or a button) causing the device to perform the described act. In many cases, this aspect may not be described below, but it will be understood.

As an example, it is described that the server 512 or the devices 514, 516, 518, 522 may send information to the server 512. For example, a user using the user device 522 may manipulate one or more input devices (e.g., a mouse and a keyboard) to interact with a user interface displayed on a display of the user device 522. Generally, the device 522 may receive a user interface from the network 520 (e.g., in the form of a webpage). Alternatively, or in addition, a user interface may be stored locally at a device (e.g., a cache of a webpage or a mobile application).

The server 512 may be configured to receive a plurality of information, from each of the plurality of imaging devices 514, database devices 516, administrator devices 518, and user devices 522. Generally, the information may comprise at least an identifier identifying the satellite, database, administrator, or user. For example, the information may comprise one or more of a username, e-mail address, password, or social media handle.

In response to receiving information, the server 512 may store the information in storage database. The storage may correspond with secondary storage of the server 512 or the devices 514, 516, 518, 522. Generally, the storage database may be any suitable storage device such as a hard disk drive, a solid state drive, a memory card, or a disk (e.g. CD, DVD, or Blu-ray etc.). Also, the storage database may be locally connected with the server 512. In some cases, the storage database may be located remotely from the server 512 and accessible to the server 512 across a network, for example the network 520. In some cases, the storage database may comprise one or more storage devices located at a networked cloud storage provider.

The imaging device 514 may be associated with an imaging account. Similarly, the database device 516 may be associated with a database account, the administrator device 518 may be associated with an administrator account, and the user device 522 may be associated with a user account. Any suitable mechanism for associating a device with an account is expressly contemplated.

In some cases, a device may be associated with an account by sending credentials (e.g. a cookie, login, or password etc.) to the server 512. The server 512 may verify the credentials (e.g. determine that the received password matches a password associated with the account). If a device is associated with an account, the server 512 may consider further acts by that device to be associated with that account.

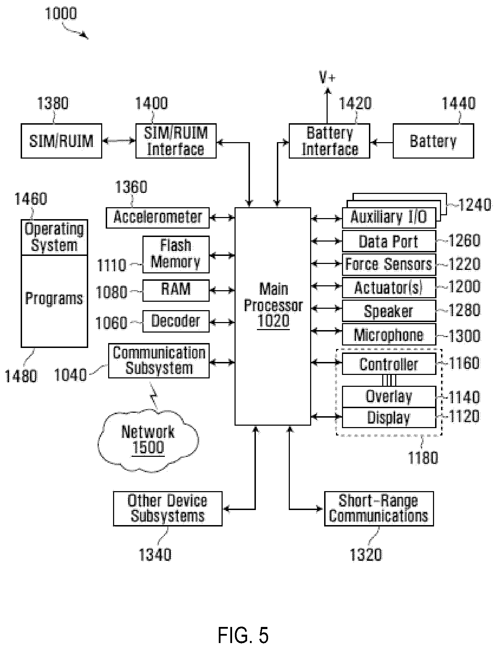

Referring now to Figure 5, shown therein is a block diagram of a computing device 1000, according to an embodiment. The computing device 1000 may be, for example, a component of the system 100 of Figure 1, the device 300 of Figure 3, or a component of the system 500 of Figure 4. The computing device 1000 may be used to implement all or part of the method 200 of Figure 2.

The computing device 1000 includes multiple components such as a processor 1020 that controls the operations of the computing device 1000. Communication functions, including data communications, voice communications, or both may be performed through a communication subsystem 1040. Data received by the computing device 1000 may be decompressed and decrypted by a decoder 1060. The communication subsystem 1040 may receive messages from and send messages to a wireless network 1500.

The wireless network 1500 may be any type of wireless network, including, but not limited to, data-centric wireless networks, voice-centric wireless networks, and dual-mode networks that support both voice and data communications.

The computing device 1000 may be a battery-powered device and as shown includes a battery interface 1420 for receiving one or more rechargeable batteries 1440.

The processor 1020 also interacts with additional subsystems such as a Random Access Memory (RAM) 1080, a flash memory 1110, a display 1120 (e.g., with a touch-sensitive overlay 1140 connected to an electronic controller 1160 that together comprise a touch-sensitive display 1180), an actuator assembly 1200, one or more optional force sensors 1220, an auxiliary input/output (I/O) subsystem 1240, a data port 1260, a speaker 1280, a microphone 1300, short-range communications systems 1320 and other device subsystems 1340.

In some embodiments, user-interaction with the graphical user interface may be performed through the touch-sensitive overlay 1140. The processor 1020 may interact with the touch-sensitive overlay 1140 via the electronic controller 1160. Information, such as text, characters, symbols, images, icons, and other items that may be displayed or rendered on a computing device generated by the processor 1020 may be displayed on the touch-sensitive display 1180.

The processor 1020 may also interact with an accelerometer 1360. The accelerometer 1360 may be utilized for detecting direction of gravitational forces or gravity-induced reaction forces.

To identify a subscriber for network access according to the present embodiment, the computing device 1000 may use a Subscriber Identity Module or a Removable User Identity Module (SIM/RUIM) card 1380 inserted into a SIM/RUIM interface 1400 for communication with a network (such as the wireless network 1500). Alternatively, user identification information may be programmed into the flash memory 1110 or performed using other techniques.

The computing device 1000 also includes an operating system 1460 and software components 1480 that are executed by the processor 1020 and which may be stored in a persistent data storage device such as the flash memory 1110. Additional applications may be loaded onto the computing device 1000 through the wireless network 1500, the auxiliary I/O subsystem 1240, the data port 1260, the short-range communications subsystem 1320, or any other suitable device subsystem 1340.

In use, a received signal such as a text message, an e-mail message, web page download, or other data may be processed by the communication subsystem 1040 and input to the processor 1020. The processor 1020 then processes the received signal for output to the display 1120 or alternatively to the auxiliary I/O subsystem 1240. A subscriber may also compose data items, such as e-mail messages, for example, which may be transmitted over the wireless network 1500 through the communication subsystem 1040.

For voice communications, the overall operation of the computing device 1000 may be similar. The speaker 1280 may output audible information converted from electrical signals, and the microphone 1300 may convert audible information into electrical signals for processing.

While the above description provides examples of one or more systems, methods, or devices, it will be appreciated that other systems, methods, or devices may be within the scope of the claims as interpreted by one of skill in the art. Elements of each embodiment may be incorporated into other embodiments, for example, configurations discussed in relation to one embodiment may be applied to other embodiments disclosed herein. Further, it is evident that various modifications and combinations can be made without departing from the invention. The specification and drawings are, accordingly, to be regarded simply as an illustration of the invention as defined by the claims, and are contemplated to cover any and all modifications, variations, combinations or equivalents that fall within the scope of the present disclosure.

## Claims

1. A system for detection and analysis of wildfire smoke using artificial intelligence, the system comprising:
an imaging device configured to collect image data;
a processing server for processing the collected image data, the processing server comprising:
a queueing subsystem comprising:
an initial frame assessment module configured to:
receive the collected image data from the imaging device;
filter the collected image data based on predetermined filtration criteria;
a resource allocation module configured to adjust an allocation of processing resources based on an amount of the filtered image data;
a queue management module configured to prioritize the filtered image data based on predetermined priority criteria to generate prioritized image data;
a motion detection subsystem comprising:
a grid cell division module configured to divide each image frame in the prioritized image data into a plurality of grid cells;
a change detection module configured to determine changes between consecutive image frames of the prioritized image data by comparing pixels within each grid cell of the plurality of grid cells of the consecutive image frames;
a density calculation and filtering module configured to, in response to detecting changes indicative of smoke, calculate a density of pixel changes, wherein grid cells having a density below a predetermined density threshold are discarded; and
a smoke detection subsystem comprising:
a preliminary object filtering module configured to identify and remove irrelevant objects from the prioritized image data;
a deep learning-based analysis module configured to analyze the prioritized image data using a smoke detection model trained to detect smoke, the smoke detection model comprising a machine-learning-based pattern detection model configured to receive the prioritized image data as an input and generate a score describing a smoke detection as an output.

2. The system of claim 1, wherein the smoke detection subsystem further comprises an automated camera control module configured to, in response to detecting smoke, control the imaging device to focus on an area where the smoke detection occurred, or an alert mechanism module configured to provide an alert to relevant personnel.

3. The system of claim 1, wherein the predetermined filtration criteria include at least one of clarity, format, and integrity of the collected image data.

4. The system of claim 1, wherein the processing resources include at least one of central processing unit, CPU, resources and graphical processing unit, GPU, resources.

5. The system of claim 1, wherein the predetermined priority criteria include at least one of a higher risk of wildfire in a depicted area and signals from previously detected smoke.

6. The system of claim 1, wherein the changes between consecutive image frames include at least one of direction of smoke changes, pattern of smoke changes, and shape of smoke changes.

7. The system of claim 1, wherein the deep learning-based analysis module is further configured to evaluate a predicted wildfire smoke detection against an actual wildfire occurrence to assess an accuracy of the smoke detection model.

8. A method for detection and analysis of wildfire smoke using artificial intelligence, the method comprising:
receiving collected image data from an imaging device;
filtering the collected image data based on predetermined filtration criteria;
adjusting an allocation of processing resources based on an amount of the filtered image data;
prioritizing the filtered image data based on predetermined priority criteria to generate prioritized image data;
dividing each image frame in the prioritized image data into a plurality of grid cells;
determining changes between consecutive image frames of the prioritized image data by comparing pixels within each grid cell of the plurality of grid cells of the consecutive image frames;
in response to detecting changes indicative of smoke, calculating a density of pixel changes, wherein grid cells having a density below a predetermined density threshold are discarded;
identifying and removing irrelevant objects from the prioritized image data;
analyzing the prioritized image data using a smoke detection model trained to detect smoke, the smoke detection model comprising a machine-learning-based pattern detection model configured to receive the prioritized image data as an input and generate a score describing a smoke detection as an output.

9. The method of claim 8, further comprising, in response to detecting smoke, controlling the imaging device to focus on an area where the smoke detection occurred, or further comprising providing an alert to relevant personnel.

10. The method of claim 8, wherein the predetermined filtration criteria include at least one of clarity, format, and integrity of the collected image data.

11. The method of claim 8, wherein the score is outputted as a single numerical score or as a categorical score.

12. The method of claim 8 further comprising evaluating a predicted wildfire smoke detection against an actual wildfire occurrence to assess an accuracy of a smoke detection model.

13. A device for detection and analysis of wildfire smoke using artificial intelligence, the device comprising:
a network interface;
a processor; and
a non-transitory computer readable memory having stored thereon instructions that, when executed by the processor, cause the device to:
receive collected image data from an imaging device;
filter the collected image data based on predetermined filtration criteria;
adjust an allocation of processing resources based on an amount of the filtered image data;
prioritize the filtered image data based on predetermined priority criteria to generate prioritized image data;
divide each image frame in the prioritized image data into a plurality of grid cells;
determine changes between consecutive image frames of the prioritized image data by comparing pixels within each grid cell of the plurality of grid cells of the consecutive image frames;
in response to detecting changes indicative of smoke, calculate a density of pixel changes, wherein grid cells having a density below a predetermined density threshold are discarded;
identify and remove irrelevant objects from the prioritized image data;
analyze the prioritized image data using a smoke detection model trained to detect smoke, the smoke detection model comprising a machine-learning-based pattern detection model configured to receive the prioritized image data as an input and generate a score describing a smoke detection as an output.

14. The device of claim 13, wherein the device is further configured to, in response to detecting smoke, control the imaging device to focus on an area where the smoke detection occurred, or wherein the device is further configured to provide an alert to relevant personnel.

15. The device of claim 13, wherein the predetermined filtration criteria include at least one of clarity, format, and integrity of the collected image data.
